Europäisches Patentamt

European Patent Office

Office européen des brevets

(19)

(11) **EP 1 154 032 A2**

(12) **EUROPÄISCHE PATENTANMELDUNG**

(43) Veröffentlichungstag:
  **14.11.2001   Patentblatt 2001/46**

(51) Int Cl.[7]: **C23C 4/02**, C23C 4/12

(21) Anmeldenummer: **01109646.8**

(22) Anmeldetag: **19.04.2001**

(84) Benannte Vertragsstaaten:
  **AT BE CH CY DE DK ES FI FR GB GR IE IT LI LU
  MC NL PT SE TR**
  Benannte Erstreckungsstaaten:
  **AL LT LV MK RO SI**

(30) Priorität: **09.05.2000   DE 10022155**

(71) Anmelder: **Deutsches Zentrum für Luft- und
  Raumfahrt e.V.
  53175 Bonn (DE)**

(72) Erfinder: **Thaler, Heiko
  71067 Sindelfingen (DE)**

(74) Vertreter: **Grimm, Ekkehard, Dipl.-Phys.
  Patentanwälte
  Grimm & Staudt
  Edith-Stein-Strasse 22
  63075 Offenbach (DE)**

(54)   **Verfahren zum Bilden einer Wärmedämmschicht**

(57)   Die Erfindung beschreibt ein Verfahren zum Bilden einer Wärmedämmschicht mit einer säulenähnlichen Struktur, die auf einem Substrat aus pulver- oder partikelförmigen Ausgangsmaterialien aufgebaut ist, wobei zwischen Substrat und Wärmedämmschicht eine Zwischen- oder Haftschicht aufgebracht wird, bei dem das Ausgangsmaterial thermisch auf dem Substrat beschichtet wird und die einzelnen Partikel in einer Flamme auf eine solche Temperatur gebracht werden, daß sie oberflächlich angeschmolzen sind, so daß die Partikel der einzelnen Schichten auf dem Substrat unter Aufrechterhaltung der Partikelform aneinander anschmelzen, und wobei während des Beschichtungsvorgangs eine Relativbewegung zwischen Substrat und Flamme erzeugt wird mit einer Relativgeschwindigkeit oberhalb 30 mm/sec, so daß sich säulenähnliche Strukturen aufbauen, wobei der Säulendurchmesser im wesentlichen dem Durchmesser der abgeschiedenen und aneinandergeschmolzenen Partikeln entspricht.

EP 1 154 032 A2

## Beschreibung

Die vorliegende Erfindung betrifft ein Verfahren zum Bilden einer Wärmedämmschicht.

Ein Einsatzgebiet von Wärmedämmschichten ist die Beschichtung von Turbinen und Brennkammern sowie deren Teilen, um dadurch höhere Verbrennungstemperaturen zu erzielen. Solche Wärmedämmschichten werden mit den unterschiedlichsten Verfahren auf den entsprechenden Teilen aufgebracht. Hierzu sind beispielsweise Plasmaspritzen oder Elektronenstrahl-PVD zu nennen.

Von besonderem Interesse sind Schichten, die gute Eigenschaften hinsichtlich der Wärmedämmung, der Schichthaftung und der Thermoschockbeständigkeit haben.

Zur Sicherstellung der Haftfestigkeit der vorstehend angegebenen Oberflächenschichten werden üblicherweise die zu beschichtenden Substrate zunächst mit einer Zwischen- oder Haftschicht versehen.

Der vorliegenden Erfindung liegt die Aufgabe zugrunde, eine Wärmedämmschicht aus Pulvermaterial aufzubauen, die eine ausgezeichnete Wärmedämmung, Schichthaftung und Thermoschockbeständigkeit zeigt.

Gelöst wird die Aufgabe durch ein Verfahren zum Bilden einer Wärmedämmschicht mit einer säulenähnlichen Struktur, die auf einem Substrat aus pulver- oder partikelförmigen Ausgangsmaterialien aufgebaut ist, wobei zwischen Substrat und Wärmedämmschicht eine Zwischen- oder Haftschicht aufgebracht wird, bei dem das Ausgangsmaterial thermisch auf dem Substrat beschichtet wird und die einzelnen Partikel in einer Flamme, insbesondere einem Plasma, auf eine solche Temperatur gebracht werden, daß sie oberflächlich angeschmolzen sind, so daß die Partikel der einzelnen Schichten auf dem Substrat unter Aufrechterhaltung der Partikelform aneinander anschmelzen, und wobei während des Beschichtungsvorgangs eine Relativbewegung zwischen Substrat und Flamme/Plasma erzeugt wird mit einer Relativgeschwindigkeit oberhalb 30 mm/sec, so daß sich säulenähnliche Strukturen aufbauen, wobei der Säulendurchmesser im wesentlichen dem Durchmesser der abgeschiedenen und aneinandergeschmolzenen Partikeln entspricht.

Mit diesem Verfahren wird der Aufbau einer Wärmedämmschicht mit einer säulenähnlichen Struktur mittels eines thermischen Beschichtungsverfahrens angegeben, wobei zum Beschichten Pulverpartikel über die Flamme/das Plasma auf ein Substrat aufgebracht werden. Wesentlich ist hierbei, daß zwischen Substrat und Flamme eine Relativgeschwindigkeit oberhalb von 30 mm/sec eingehalten wird, da gerade hohe Relativgeschwindigkeiten zu der säulenähnlichen Struktur führen. Hierbei stapeln sich einzelne Partikel übereinander, während zwischen diesen Säulenstrukturen aus Partikeln Zwischenräume verbleiben, die annähernd bis zu der Substratoberfläche reichen. Eine bevorzugte Relativgeschwindigkeit zwischen Substrat und Beschichtungsflamme sollte oberhalb von 40 mm/s, noch bevorzugter oberhalb von 60 mm/s, eingestellt werden. Sehr gute Ergebnisse wurden auch bei 100 mm/s und darüber erzielt. Bei diesen hohen Relativgeschwindigkeiten wird erreicht, daß Partikel, die unmittelbar auf dem Substrat unter Beibehaltung ihrer wesentlichen Partikelform - sozusagen in der ersten Lage - abgeschieden wurden, als Keime bzw. als bevorzugte Anlagerungsstellen für weitere, nachfolgende, oberflächlich angeschmolzene Partikel dienen.

Bevorzugt wird die säulenähnliche Struktur durch eine im wesentlichen geschlossene, d.h. dichte, Deckschicht abgedeckt, und zwar unter Erhaltung der säulenähnlichen Struktur. Zum Bilden dieser Deckschicht wird, verglichen mit den Verfahrensparameter beim Erzeugen der säulenähnlichen Struktur, die Relativgeschwindigkeit zwischen Substrat und Flamme verringert. Dieser Effekt tritt besonders ausgeprägt dann auf, wenn von hohen Relativgeschwindigkeiten beim Aufbauen der säulenähnlichen Struktur, wie sie vorstehend angegeben sind, ausgegangen wird. Durch eine solche Deckschicht auf der säulenartigen Struktur wird die Oxidation der Wärmedämmschicht reduziert und die Wärmedämmwirkung erhöht.

Durch verschiedene Verfahrensparameter kann der Aufbau der angegebenen, säulenähnlichen Struktur stark beeinflußt werden. Ein solcher Parameter ist der Abstand zwischen Flamme und Substrat, der im Bereich von 250 mm bis 500 mm, vorzugsweise im Bereich von 270 mm bis 350 mm, liegen sollte. Bei zu großen Abständen tritt eine zu frühe oberflächliche Erstarrung auf, die den Zusammenhalt der Partikel schwächt.

Sofern Abstände zwischen Flamme/Plasma und Substrat angegeben sind, beziehen sich diese auf das Ende des jeweiligen Brenners

Mit einem solchen thermischen Beschichtungsverfahren können Pulverpartikel, bevorzugt Keramiken, auf ein Substrat, zum Erzeugen der säulenähnlichen Struktur und der daraus aufgebauten Wärmedämmschichten aufgespritzt werden.

Bevorzugte Pulver für säulenähnliche Strukturen sind $Al_2O_3$ und $ZrO_2$, insbesondere stabilisiertes $ZrO_2$. Diese Keramiken zeichnen sich insbesondere durch ihre hohen Schmelzpunkte und geringen Wärmeleitfähigkeiten aus. Gerade bei diesen Materialien kann ein sehr definiertes Anschmelzen der Oberfläche erzielt werden. Im Hinblick auf $ZrO_2$ wird bevorzugt stabilisiertes $ZrO_2$ eingesetzt, wobei als Stabilisator $Y_2O_3$ in einer Menge von 4 bis 15 Gew.-%, selten auch bis 20 Gew.-%, bezogen auf die Gesamtmenge an Pulver eingesetzt werden sollte. Stabilisiertes $ZrO_2$ hat, gegenüber nicht mit einem Stabilisator versehenen $ZrO_2$, den Vorteil, daß bestimmte Phasen, z.B. die tetragonale Phase bei $ZrO_2$, bevorzugt eingestellt werden und diese sich auch im Betrieb über ein breites Temperaturfenster nicht ändert.

Ein weiterer Parameter, um die sich aufbauende Säulenstruktur zu beeinflussen, ist die eingesetzte Pulverfraktion, die im Bereich von 5 μm bis 800 μm, bevorzugt 50 μm bis 250 μm, Partikeldurchmesser liegen sollte. Diese Partikeldurchmesser werden oberflächlich angeschmolzen, so daß sie beim Auftreffen auf das Substrat bzw. auf die bereits aufgebaute Säulenstruktur ausreichend aneinander anschmelzen, um eine stabile Verbindung über die oberflächliche, schmelzflüssige Phase einzugehen.

Bevorzugte Pulverdurchsatzmengen liegen im Bereich von 4 bis 30 g/min, vorzugsweise im Bereich von 10 bis 20 g/min. Mit Pulverdurchsatzmengen in diesen Bereichen können gerade zu Beginn des Schichtaufbaus geeignete Abstände der sich abscheidenden Partikel auf dem Substrat erreicht werden, woraus sich später auch der Abstand der sich aufbauenden Säulen der Säulenstruktur ergibt.

Durch geeignete Wahl und Einstellung der Pulverdurchsatzmenge und der Relativgeschwindigkeit sowie des Abstands zwischen Plasmaflamme und Substrat können Säulenabstände erhalten werden, die etwa 5% bis 50%, vorzugsweise 10 bis 25%, des mittleren Partikeldurchmessers entsprechen.

Sofern Abstände zwischen Flamme/Plasma und Substrat angegeben sind, beziehen sich diese auf das Ende des jeweiligen Brenners.

Besonders bevorzugt wird mit einem Vakuumplasmaspritzverfahren gearbeitet, da über den Druck in der Beschichtungskammer Einfluß auf die Bildung der säulenähnlichen Struktur genommen werden kann. Bevorzugte Drücke in der Beschichtungskammer sollten auf p < 500 mbar ( $5 \cdot 10^4$ Pa) eingestellt werden. Noch bevorzugter sollte der Druck im Bereich von 100 mbar < p < 300 mbar ($1 \cdot 10^4$ Pa < p < $3 \cdot 10^4$ Pa) liegen. Finden die Beschichtungen im Vakuum statt, und unter Bildung der dichten Deckschicht, so bilden die Hohlräume zwischen den Säulen Wärmedämmzonen, deren Wärmedurchgang minimiert wird. Die thermische Leitfähigkeit der gesamten Wärmedämmschicht setzt sich dann zusammen aus der thermischen Leitfähigkeit der Säulen und der dazwischenliegenden Hohlräume.

Als Ausgangspulver sollte bevorzugt solches eingesetzt werden, dessen Partikelgröße im Bereich von 5 μm bis 800 μm liegt, wobei ein Bereich zwischen 50 μm und 250 μm als besonders bevorzugter Bereich herauszustellen ist. Untersuchungen haben weiterhin gezeigt, daß eine Pulverfraktion eingesetzt werden sollte, die Partikel in einem Durchmesserbereich zwischen einem minimalen Partikeldurchmesser $d_{min}$ und einem maximalen Partikeldurchmesser $d_{max}$ umfaßt, die folgender Vorschrift genügt:

$$\frac{\Delta d}{d_a{}^{max}} < 0,25$$

wobei $d_a{}^{max}$ den Pulverpartikeldurchmesser angibt, der in der gewählten Pulverfraktion den größten Anteil bildet, und wobei $\Delta d$ die Schwankungsbreite der Partikeldurchmesser um diesen am häufigsten vorkommenden Partikeldurchmesser darstellt.

Für $d_a{}^{max}$ kann zur Vereinfachung auch der Vorschrift gefolgt werden:

$$d_a{}^{max} = \frac{d_{min} + d_{max}}{2}$$

Um zu einer säulenähnlichen Struktur zu gelangen, sollte der Grad des Anschmelzens m der Oberflächenschicht der Partikel der Vorschrift

$$m = \frac{d - d_s{}^*}{d}$$

folgen,
wobei d den Partikeldurchmesser bezeichnet und wobei $d_s{}^*$ den Durchmesser des verbleibenden festen Kerns bezeichnet, wobei für m gilt

$$5\% < m \leq 30\%.$$

Um die Bildung einer Säulenstruktur zu fördern, sollten Partikel in dem Fraktionsbereich

$$0,75 \leq \frac{d_{min}}{d_{max}} < 1$$

eingesetzt werden.

Um die Wärmedämmleistung zu erhöhen, um aber auch sehr dicke Schichten mit einer hohen Stabilität aufbauen zu können, unter Beibehalten der säulenähnlichen Struktur, können mehrere säulenähnlich strukturierte Schichten durch jeweils eine Zwischenschicht getrennt werden, wobei die Zwischenschicht dadurch erzeugt wird, daß die Relativgeschwindigkeit zwischen Substrat und Flamme gegenüber derjenigen Relativgeschwindigkeit bei der Erzeugung der darunterliegenden, säulenähnlich strukturierten Schicht verringert wird.

Alternativ, oder zusätzlich, kann, um solche Zwischenschichten zu erzeugen, die Pulverdurchsatzmenge gegenüber derjenigen, die bei der Erzeugung der darunterliegenden, säulenähnlich strukturierten Schicht eingesetzt wird, erhöht werden; gleichzeitig sollte auch der oberflächliche Anschmelzgrad der Partikel erhöht werden. Es hat sich gezeigt, daß die Erhöhung der Pulverdurchsatzmenge das 1,5-fache derjenigen Pulvermenge betragen sollte, die zum Aufbau der darunterliegenden, säulenähnlich strukturierten Schicht eingesetzt wurde.

Die nach dem angegebenen Verfahren hergestellten Wärmedämmschichten sind insbesondere als Oberflächenschicht für die Beschichtung von thermisch belasteten Bauteilen, für die Oberflächenbeschichtung von Turbinenschaufeln, für die Oberflächenbeschichtung von Flugtriebwerksteilen sowie die Oberflächenbeschichtung von Brennkammern oder deren Teilen geeignet.

Weitere Einzelheiten und Merkmale der Erfindung ergeben sich aus der nachfolgenden Beschreibung von Ausführungsbeispielen anhand der Zeichnung. In der Zeichnung zeigt

Figur 1     schematische eine Schnittdarstellung eines Substrats mit einer Haftschicht sowie einer darauf aufgebauten Wärmedämmschicht,

Figur 2     eine der Figur 1 entsprechende Darstellung, bei der allerdings gegenüber der Ausführungsform in Figur 1 eine Deckschicht aufgebracht ist, und

Figur 3     eine Anordnung von zwei säulenähnlich strukturierten Schichten, die durch eine Zwischenschicht getrennt sind, ebenfalls mit einer Deckschicht auf der zweiten, oberen, säulenähnlich strukturierten Schicht, und

Figur 4     eine graphische Darstellung der Partikeldurchmesserverteilung der zum Plasmaspritzen eingesetzten Pulverfraktionen.

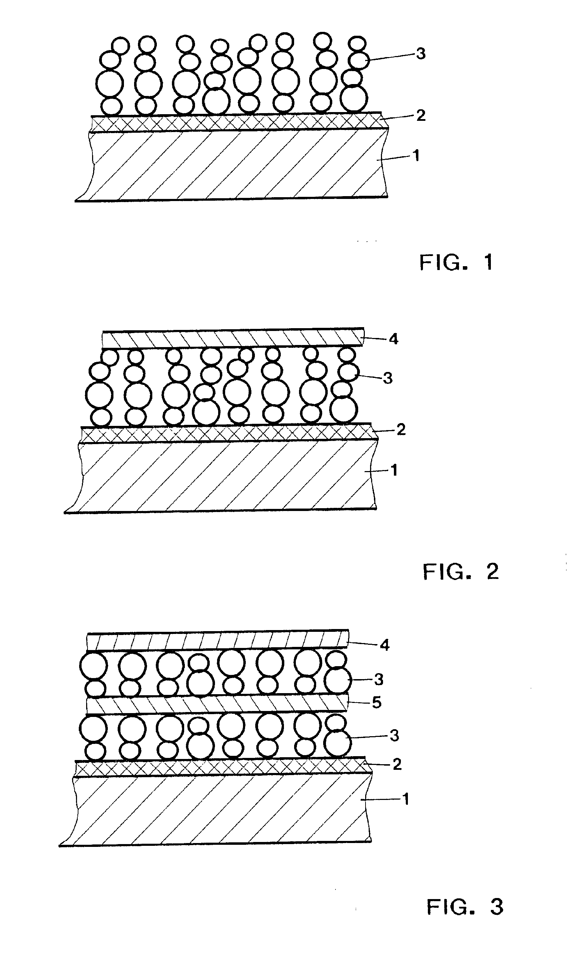

In den Figuren 1 bis 3 sind drei verschiedene Schnittdarstellungen von Wärmedämmschichten gezeigt.

Hierbei stellt Figur 1 eine Grundstruktur mit einem Substrat 1, auf dem eine Haft- bzw. Zwischenschicht 2 aufgebracht ist, dar. Diese Haft- oder Zwischenschicht 2 kann plasmaspritztechnisch aus einem Feinpulver gebildet werden, das geeignet gewählt ist, um sich einerseits gut mit dem Substrat 1 zu verbinden, das andererseits eine Grundlage für den Aufbau einer Säulenstruktur bietet. Auf diese Haftschicht 2 werden, wie in Figur 1, dann säulenähnliche Strukturen 3 aufgebracht. Gerade für Wärmedämmschichten eignen sich Keramikmaterialien, um diese säulenähnlichen Strukturen 3 aufzubauen. Eine bevorzugte Pulverfraktion für solche keramischen Materialien umfassen Pulverpartikel zwischen 25 und 150 µm. Geeignete Pulverdurchsatzmengen liegen dabei im Bereich von 5 bis 20 g/min. Wesentlich ist, daß zur Erzeugung der säulenartigen Strukturen 3 Relativgeschwindigkeiten zwischen Substrat 1 und dem Plasmabrenner beim Beschichten gleichmäßig aufrechterhalten werden, die bevorzugt auch über 60 mm/s liegen. Schichten, die aufgebaut wurden, wurden mit einem Plasmabrenner durchgeführt, der einen Innendurchmesser von 50 mm besaß und in einem elektrischen Leistungsbereich von 10 bis 30 kW betrieben wurde.

Aufgrund der Relativbewegung beim plasmatechnischen Spritzen zwischen Substrat 1 und nicht gezeigtem Plasmabrenner entstehen die in Figur 1 schematisch dargestellten Säulenstrukturen. Angedeutet sind hierbei Säulen aus Partikeln mit unterschiedlichem Durchmesser, die sich schichtweise übereinander stapeln. Ein wesentlicher Verfahrensparameter, um diese säulenartigen Strukturen aus den Pulverpartikeln zu erzeugen, ist derjenige, daß beim Spritzen der Pulverpartikel auf das Substrat 1 bzw. die Zwischen- und/oder Haftschicht 2 die Oberfläche der Pulverpartikel nur angeschmolzen wird. Die dann aufeinandertreffenden Pulverpartikeln, die nur in der Oberfläche angeschmolzen sind, gehen eine schmelzflüssige Verbindung mit den jeweils darunterliegenden Pulverpartikeln ein. Nach dem Erstarren sind sie fest miteinander verbunden. Da die Pulverpartikel in ihrem Kern im wesentlichen nicht angeschmolzen bzw. in eine flüssige Phase versetzt werden, ist gewährleistet, daß die Partikelform im wesentlichen erhalten bleibt. Durch den Grad des Anschmelzens der einzelnen Pulverpartikel der eingefüllten Pulverfraktion, aber auch durch die eingesetzte Pulverfraktion mit den ausgewählten Pulverpartikeldurchmessern, kann die Bildung der Säulenstruktur 3 beeinflußt werden. Es ist weiterhin darauf hinzuweisen, daß die Säulen der säulenähnlichen Schicht 3 dreidimensional betrachtet ähnlich einer Schraubenform angeordnet sein können, da sie sich nicht exakt übereinander schichten. Diese Schraubenform ist in der zweidimensionalen Darstellung in Figur 1 durch den jeweiligen Versatz der einzelnen Pulverpartikel angedeutet.

Eine vorteilhafte Ausführungsform, die in ihrem Aufbau grundsätzlich derjenigen in Figur 1 entspricht, ist in Figur 2 gezeigt. Auf der säulenähnlichen Struktur 3 ist eine dichte Abschluß- oder Abdeckschicht 4 auf die säulenähnliche Struktur 3 aufgebracht. Diese Deckschicht 4 ist ebenfalls spritztechnisch gebildet, und zwar dadurch, daß beim Spritzen die Relativgeschwindigkeit zwischen Substrat und Plasmabrenner verringert wird, der Anschmelzgrad der Oberflächenschicht der Pulverpartikel erhöht wird, und/oder der Anteil an feinkörnigerem Pulver erhöht wird. Durch die dichte Abschlußschicht 4 wird erreicht, daß die Oxidation der Wärmedämmschicht reduziert wird. Falls die Beschichtung im Vakuum durchgeführt wird, bilden die Hohlräume zwischen den einzelnen Säulen der säulenähnlichen Schicht 3 Wärmedämmzonen, deren Wärmedurchgang minimiert wird.

Weiterhin kann es vorteilhaft sein, eine Wärmedämmschicht schichtweise aus mehreren säulenähnlichen Schichten aufzubauen, die jeweils durch eine dichte Zwischenschicht, in Figur 3 mit dem Bezugszeichen 5 bezeichnet, getrennt sind. Auch bei einem solchen mehrschichtigen Aufbau wird vorzugsweise die obere, säulenähnliche Struktur 3 mit einer dichten Abschlußschicht 4 abgeschlossen. Ein Schichtaufbau der Wärmedämmschicht, wie er in Figur 3 eingesetzt ist, ist besonders in Anwendungsfällen geeignet, bei denen eine sehr hohe Wärmedämmung und ein hoher Schutz gegen Korrosion gefordert ist, z.B. bei Anwendungen, wo Verbrennungstemperaturen über 1100°C auftreten.
Wie erläutert ist, sollte das Ausgangspulver der Vorschrift

$$\frac{\Delta d}{d_a{}^{max}} < 0,35$$

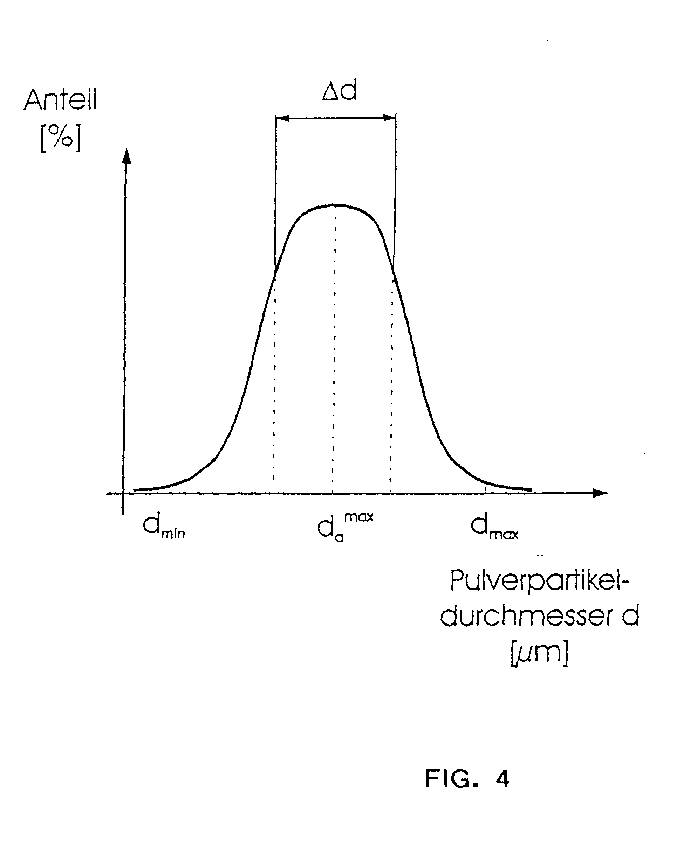

genügen; die Zusammenhänge zwischen $d_a{}^{max}$, $\Delta d$, $d_{min}$ (minimaler Partikeldurchmesser d) und $d_{max}$ (maximaler Partikeldurchmesser d) sind in Figur 4 dargestellt, und zwar in Abhängigkeit des prozentualen Anteils der jeweiligen Pulverpartikeldurchmesser, die in einem Ausgangspulver vorhanden sind.
Ein besonderer Vorteil, der durch das angegebene Verfahren angegeben ist, ist derjenige, daß die Schichtstrukturen der Wärmedämmschichten, wie sie in den Figuren 1 bis 3 dargestellt sind, d.h. der Haftschichten 2, der säulenähnlichen Strukturen 3, der Abdeckschichten 4 und eventueller Zwischenschichten 5, insbesondere durch ein Hochfrequenzplasmaspritzverfahren aufgebaut werden können, wobei zum Erzeugen der jeweiligen Schichtarten während des Beschichtungsvorgangs entsprechende Parameter, wie sie bereits erläutert wurden, geändert werden.

**Patentansprüche**

1. Verfahren zum Bilden einer Wärmedämmschicht mit einer säulenähnlichen Struktur, die auf einem Substrat aus pulver- oder partikelförmigen Ausgangsmaterialien aufgebaut ist, wobei zwischen Substrat und Wärmedämmschicht eine Zwischen- oder Haftschicht aufgebracht wird, bei dem

   das Ausgangsmaterial thermisch auf dem Substrat beschichtet wird und die einzelnen Partikel in einer Flamme auf eine solche Temperatur gebracht werden, daß sie oberflächlich angeschmolzen sind, so daß die Partikel der einzelnen Schichten auf dem Substrat unter Aufrechterhaltung der Partikelform aneinander anschmelzen, und

   wobei während des Beschichtungsvorgangs eine Relativbewegung zwischen Substrat und Flamme erzeugt wird mit einer Relativgeschwindigkeit oberhalb 30 mm/sec, so daß sich säulenähnliche Strukturen aufbauen, wobei der Säulendurchmesser im wesentlichen dem Durchmesser der abgeschiedenen und aneinandergeschmolzenen Partikeln entspricht.

2. Verfahren nach Anspruch 1, **dadurch gekennzeichnet, daß** auf der säulenähnlichen Struktur eine im wesentlichen geschlossene (dichte) Deckschicht aufgebracht wird, indem die Relativgeschwindigkeit zwischen Substrat und Flamme verringert wird.

3. Verfahren nach Anspruch 1, **dadurch gekennzeichnet, daß** die Relativgeschwindigkeit auf oberhalb von 40 mm/s, bevorzugt oberhalb 60 mm/s, eingestellt wird.

4. Verfahren nach Anspruch 1, **dadurch gekennzeichnet, daß** der Abstand zwischen Plasmaflamme und Trägermaterial 250 mm bis 500 mm, vorzugsweise 270 mm bis 350 mm, beträgt.

5. Verfahren nach einem der Ansprüche 1 bis 3, **dadurch gekennzeichnet, daß** die Pulverpartikel aus einem keramischen Material gebildet sind.

6. Verfahren nach Anspruch 5, **dadurch gekennzeichnet, daß** als keramisches Material $Al_2O_3$ eingesetzt wird.

7. Verfahren nach Anspruch 5, **dadurch gekennzeichnet, daß** als keramisches Material $ZrO_2$, insbesondere stabilisiertes $ZrO_2$, eingesetzt wird.

8. Verfahren nach Anspruch 4, **dadurch gekennzeichnet, daß** eine Pulverfraktion im Bereich von 5 µm bis 800 µm, bevorzugt von 100 µm bis 250 µm, liegt.

9. Verfahren nach Anspruch 7, **dadurch gekennzeichnet, daß** $Y_2O_3$ als Stabilisator in einer Menge von 4 bis 15 Gew.-%, bezogen auf die Gesamtmenge an Pulver, eingesetzt wird.

10. Verfahren nach Anspruch 4, **dadurch gekennzeichnet, daß** die Pulverdurchsatzmenge im Bereich von 4 bis 30 g/min, vorzugsweise von 10 bis 20 g/min, liegt.

11. Verfahren nach Anspruch 1, **dadurch gekennzeichnet, daß** Pulverdurchsatzmenge und Relativgeschwindigkeit sowie der Abstand zwischen Plasmaflamme und Trägermaterial derart eingestellt werden, daß der Säulenabstand 5 bis 50%, bevorzugt 10 bis 25%, des mittleren Partikeldurchmessers entspricht.

12. Verfahren nach Anspruch 1, **dadurch gekennzeichnet, daß** als thermisches Beschichtungsverfahren ein Vakuumplasmaspritzverfahren eingesetzt wird.

13. Verfahren nach Anspruch 12, **dadurch gekennzeichnet, daß** in der Beschichtungskammer unter einem Druck p < 500 mbar (5 · $10^4$ Pa) gearbeitet wird.

**14.** Verfahren nach Anspruch 13, **dadurch gekennzeichnet, daß** der Druck im Bereich 100 mbar < p < 300 mbar ($1 \cdot 10^4$ Pa < p < $3 \cdot 10^4$ Pa) liegt.

**15.** Verfahren nach Anspruch 8, **dadurch gekennzeichnet, daß** eine Pulverfraktion eingesetzt wird, die Partikel in einem Durchmesserbereich zwischen einem minimalen Partikeldurchmesser $d_{min}$ und einem maximalen Partikeldurchmesser $d_{max}$ umfaßt, die folgender Vorschrift genügt:

$$\frac{\Delta d}{d_a^{\ max}} < 0,25$$

wobei $d_a^{\ max}$ den Pulverpartikeldurchmesser angibt, der in der genannten Pulverfraktion den größten Anteil bildet, und wobei $\Delta d$ die Schwankungsbreite der Partikeldurchmesser um den größten Partikeldurchmesser darstellt.

**16.** Verfahren nach Anspruch 8, **dadurch gekennzeichnet, daß** zur Erzeugung der Säulenstruktur die Oberflächenschicht der Partikel angeschmolzen wird, wobei der Grad des Anschmelzens m folgender Vorschrift genügt:

$$m = \frac{d - d_s^{\ *}}{d}$$

wobei

d: Partikeldurchmesser

$d_s^{\ *}$: verbleibender fester Kern

mit 5% < m ≤ 30%.

**17.** Verfahren nach Anspruch 8, **dadurch gekennzeichnet, daß** zur Erzeugung Säulenstruktur Partikel in dem Fraktionsbereich

$$0,75 \le \frac{d_{min}}{d_{max}} \le 1$$

eingesetzt sind.

**18.** Verfahren nach Anspruch 1, **dadurch gekennzeichnet, daß** mehrere, säulenähnlich strukturierte Schichten durch jeweils eine Zwischenschicht getrennt werden, wobei die Zwischenschicht dadurch erzeugt wird, daß die Relativgeschwindigkeit zwischen Substrat und Flamme gegenüber derjenigen Relativgeschwindigkeit bei der Erzeugung der darunterliegenden, säulenähnlich strukturierten Schicht verringert wird.

**19.** Verfahren nach Anspruch 1, **dadurch gekennzeichnet, daß** mehrere, säulenähnlich strukturierte Schichten durch jeweils eine Zwischenschicht getrennt werden, wobei die Zwischenschicht dadurch erzeugt wird, daß die Pulverdurchsatzmengen gegenüber derjenigen bei der Erzeugung der darunterliegenden, säulenähnlich strukturierten Schicht erhöht wird sowie der oberflächliche Anschmelzgrad der Partikel erhöht wird.

**20.** Verfahren nach Anspruch 19, **dadurch gekennzeichnet, daß** die Erhöhung der Pulverdurchsatzmenge um mindestens das 1,5-fache erfolgt.

**21.** Verwendung der nach einem der Ansprüche 1 bis 20 hergestellten Oberflächenschicht für die Oberflächenbeschichtung von thermisch belasteten Bauteilen.

**22.** Verwendung der nach einem der Ansprüche 1 bis 20 hergestellten Oberflächenschicht für die Oberflächenbeschichtung von Turbinenschaufeln.

**23.** Verwendung der nach einem der Ansprüche 1 bis 20 hergestellten Oberflächenschicht für die Oberflächenbeschichtung von Flugtriebwerksteilen.

**24.** Verwendung der nach einem der Ansprüche 1 bis 20 hergestellten Oberflächenschicht für die Oberflächenbeschichtung von Brennkammern oder deren Teilen.

FIG. 1

FIG. 2

FIG. 3

FIG. 4